# EUROPEAN PATENT APPLICATION

(11) **EP 1 473 107 A1**
(43) Date of publication of application: **03.11.2004**
(21) Application number: 03009986.5
(22) Date of filing: 02.05.2003
(51) Int. Cl.: B23K 26/10, B23K 26/38, B42D 15/00, B23K 26/42, B26D 7/18, B42D 15/10, B26F 1/38, B65H 29/02

(54) **Machine and process for cutting openings in a substrate**

(71) Applicant: KBA-GIORI S.A., 1003 Lausanne (CH)
(72) Inventor: Schaede, Johannes Georg, 97074 Wurzburg (DE)
(74) Representative: Grosfillier, Philippe

(57) **Abstract**

The machine has at least a cutting tool (12), a transfer system (7,8) holding said substrate (1) and driving said substrate (1) along a determined direction. The cutting tool (12) comprises a laser beam (13) that can be moved in two perpendicular directions and evacuation means (11,15) to evacuate a cut part of said substrate (1).

## Description

The present invention concerns a machine for cutting an opening, for example a window, in a planar substrate.

The present invention also concerns a process for cutting an opening, for example a window, in a planar substrate.

In the field of banknotes and securities, there has been increasing needs for security features protecting against counterfeiting. Indeed, in the past years, computers, scanners and copy machines have been extensively developed and today, it is possible to buy very performing devices at a reasonable price. Since these devices are more performing, it has been at the same time necessary to develop new and improved security features for securities, such as banknotes, checks, cards (i.e. credit cards), ID cards, passports etc. which would not allow them to be copied by standard computers or scanners, or even modern color copy machines.

Such security features include special inks with iridescent properties, so called optically variable inks, used to print specific patterns on the substrate of the note, optically variable devices (such as holograms, kinegrams) in the shape of metallized patches, or also specific patterns, such as moiré patterns and other similar patterns, all of which are very difficult if not impossible to copy by actual machines, but, on the other hand, are easy to control visually.

Other security features include combinations of superimposed lines and/or patterns with colors, which are only visible under specific conditions, for example UV light or by transparency. Again, the interest of such security means is that they may easily be printed or placed on the document to be protected and also be controlled by simple devices, even visually, but they are impossible to reproduce with actual printers, scanners or copy machines.

Another specific technique involves watermarks in which the paper substrate is marked with lines or patterns only visible in transparency. A further development of this technique concerns pseudo-watermarks consisting in the creation of a window in the substrate, especially in paper-based substrates, which are normally not transparent, said window being transparent.

It is however very difficult to create or simulate a transparent window in a paper-based substrate. Transparent windows, as such, are widely used in polymer-based substrates for banknotes and securities, in order to provide a security element. These polymer-based substrates are usually completely transparent; therefore, to form a transparent window, it is only necessary to leave the chosen zone free of printing. However, in the case of paper, a substrate which is not transparent, a first process has been developed according to which, it is possible to reduce locally the thickness of the paper in order to create a transparent window in the substrate. PCT application WO 99/14433 for example, discloses this process and the content of this application is incorporated by reference in the present application. According to this known process, a soaking solution is applied on at least one surface of the paper in one or several predetermined zones, then one applies pressure and heat on the soaked zone so as to evaporate and densify the coated paper in said zone relative to the rest of the paper. Thus, said zones have a reduced thickness with respect to the rest of the paper and are transparent.

This first technique however has the drawback of weakening locally the paper in the zone comprising said window. In particular, the smaller the thickness of the window, the weaker the zone. Banknotes using such a technique thus have a reduced lifetime and must be exchanged, i.e. new bank notes must be printed to replace the older damaged ones.

Another technique implies to cut a hole directly in the substrate in order to create the transparent window. For example, PCT application WO 95/10420, the content of which is incorporated by reference in the present application, discloses a paper banknote with a cut window. It is of course necessary to cover the opening cut in the substrate, which is done in this case by a covering with a strip of transparent material, e.g. a foil or a laminate.

The aim of the invention is to improve the known machines and processes.

The aim of the invention is to provide an improved machine for cutting an opening in a planar substrate.

A further aim of the invention is to provide an improved process for cutting an opening into a planar substrate.

To fulfil these aims, the invention complies with the definition given in the claims.

The invention will best understood by the description of an embodiment and of the accompanying drawings in which:
Figure 1 shows the principle of a machine according to the invention.
Figure 2 shows a cross-sectional top view of an aspiration box according to the invention.
Figure 3 shows a first embodiment of a laser guiding system.
Figure 4 shows a variant of the laser guiding system.

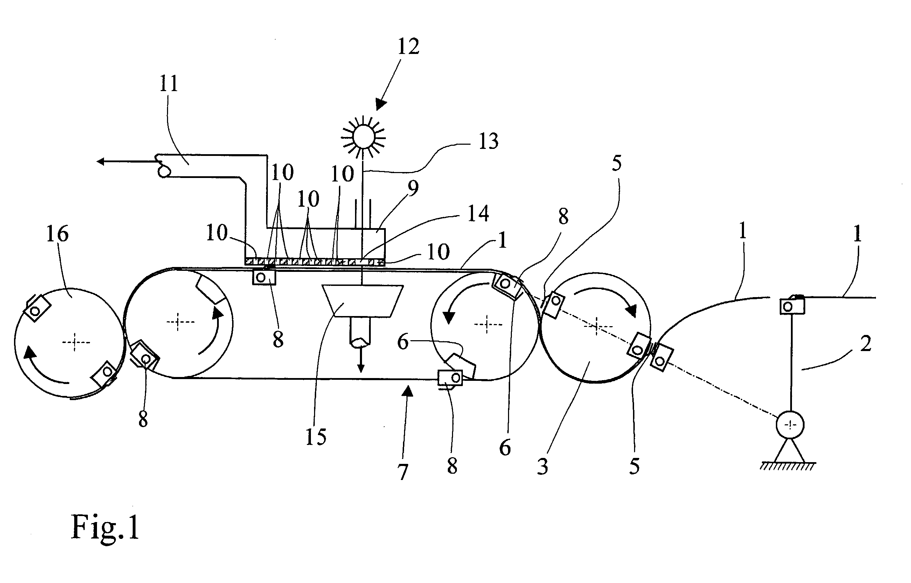

An embodiment of the machine for cutting an opening in a planar substrate is firstly described with reference to figure 1.

In this machine successive substrates 1, such as sheets of paper or other material, are brought to the machine by a feed system, for example a swing gripper transfer 2, and transferred on a first transfer cylinder 3. The successive substrates 1 are transferred by a transfer cylinder 4 known in the art of printing machines with gripper systems 5.

The substrates 1 are then transferred to a transporting device, such as a chain gripper system 7 comprising a chain on which gripper bars 8 are mounted to carry the successive substrates 1. The gripper bars cooperate with the first transfer cylinder 3 to take over the successive substrates 1 and transport them in the cutting part of the machine.

As explained, the substrates 1 are taken by the chain gripper system 7 until they arrive under the cutting part of the machine. This cutting part comprises an aspiration box 9 which has aspiration openings 10 in the bottom wall that are linked to an aspiration source 11, said source 11 providing air under depression in order to press the substrate 1 against the exterior surface of the bottom wall of the box 9 during the cutting operation.

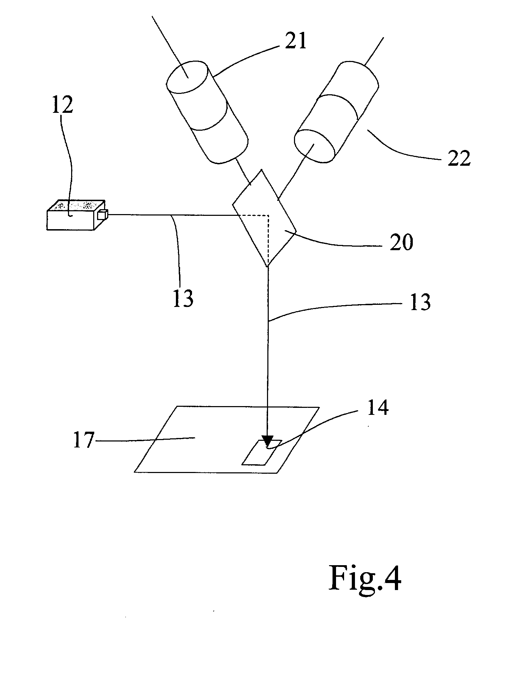

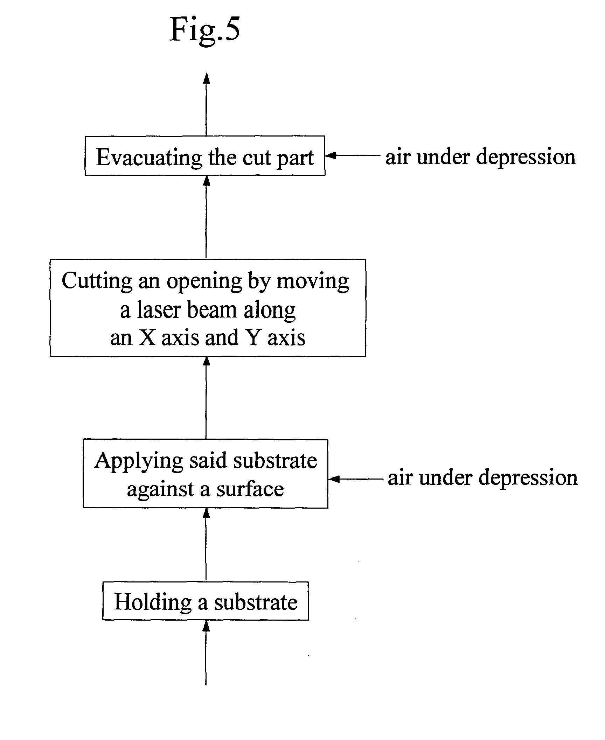

The cutting operation is carried out by a laser, the laser beam 13 being directed into a cutting opening 14 of the bottom wall of the box 9. The laser beam 13 is either aimed directly on the substrate being cut, or indirectly by means of mirrors or other equivalent devices. Accordingly, during the cutting operation, the substrate is halted and maintained pressed against the exterior surface of the bottom wall so that the laser beam may cut the wanted opening in the substrate through the cutting opening 14 of the bottom wall. This cutting opening 14 may have the same shape as the window being cut into the substrate or a larger size. To carry out the cutting operation, the laser beam 13 is aimed either directly by displacing the laser 12 itself along two orthogonal axis X-Y with appropriate mechanical means or the beam 13 can be aimed indirectly by mirrors (see figure 4) which are themselves moveable to displace the beam 13 along two orthogonal axis X-Y. The system is therefore able to cut widows of several different sizes with no change of machine, but only by a proper aiming of the beam 13 along the axis X-Y.

Once the cutting operation has taken place, the cut part is either aspirated in the box 9 through the air under depression and evacuated, or it can be aspirated in an evacuation outlet 15 also through air under depression.

Accordingly, if the cut part is being evacuated in the box via the evacuation outlet 15, it is preferred that the cutting opening 14 is closed by a transparent material, such as glass, in order to avoid balance problems with the vacuum created in box 9 and in outlet 15. If the cut part is small enough with respect to the size of the substrate, the substrate will be properly held against the exterior surface of the bottom wall during the cutting operation, even if the cutting opening is closed by a transparent material.

In a variant, it is also possible to remove the evacuation outlet 15 and evacuate the cut part through box 9.

Box 9 and evacuation outlet 15 (when present) are also useful to evacuate the fumes created by the cutting operation.

When the cutting operation is finished and the cut part has been evacuated, the substrate can be taken away by the chain gripper system 7 for further treatment, i.e. the chain gripper system 7 advances thus taking the cut substrate 1 to a second transfer cylinder 16 and the cut substrate 1 may undergo a further treatment, such as laminating a foil over the window, in a further machine (not shown). An example of such a laminate foil application machine is given in European patent application filed on April 30, 2003 with the title "Machine for applying and cutting strips of laminate", in the name of KBA-GIORI S.A., the content of which is incorporated by reference in the present application. Another example of application of such a strip of laminate foil is disclosed in European patent application N°02405782.0 filed on September 10, 2002 in the name of KBA-GIORI S.A., the content of which is incorporated by reference in the present application.

The application of a strip of foil as known in the art and disclosed hereabove would then allow the use of the technology disclosed in patent application EP 1 291 195 and in EP patent application 02405782.0 filed on September 19, 2002 in the name of KBA-GIORI S.A., both being incorporated by reference in the present application, to apply a recto-verso security and control element to the cut substrate.

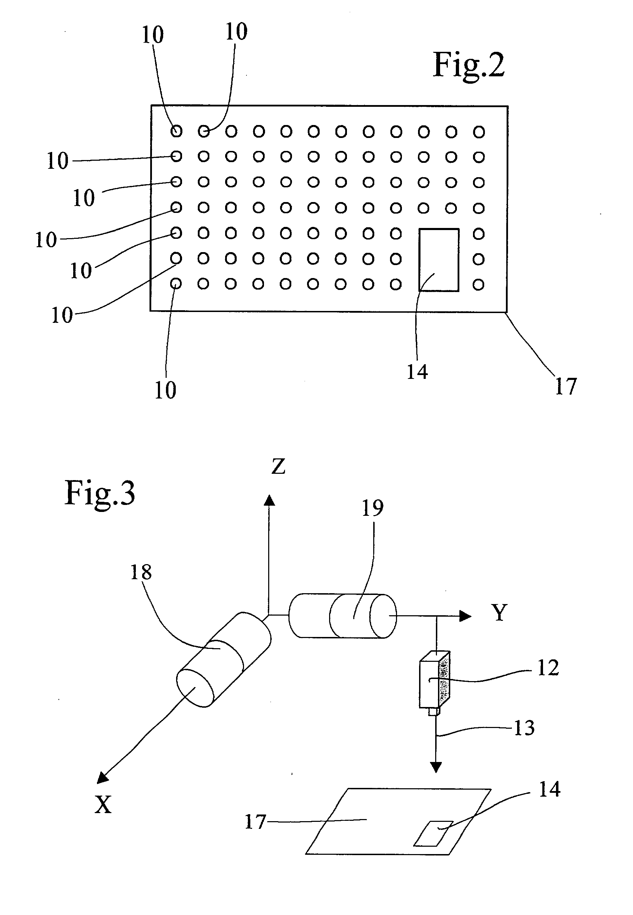

In figure 2, a top view in cross-section of the aspiration box 9 is represented. The bottom wall 17 has, as a non-limiting example, a rectangular shape and comprises several holes 10 for allowing the air under depression in the box 9 to act on the substrate and apply the substrate against the outer surface of the bottom wall 17 during the cutting operation. The bottom wall 9 further comprises the opening 14 through which the cutting is effected by the laser beam 13. The shape of the opening 14 is given by way of an example as rectangular but other shapes are possible (square, round, triangular etc.).

As mentioned above, the opening 14 may be closed by transparent material to avoid vacuum balance problems between the box 9 and the outlet 15.

In figure 3, a first system for moving the laser beam 13 along two cutting directions is shown. In this system, the principle of which is known in the art, the laser itself 12 is displaced, for example by rotation or linearly, along two axis X and Y by appropriate actuators 18, 19 (rotating or linear) to carry out the cutting operation of the substrate 1 by displacing the laser beam 13 through bottom wall 17 and opening 14.

In a variant represented in figure 4, the laser 12 itself is fixed and only the laser beam 13 is guided along the shape to be cut in the substrate through opening 14 of bottom wall 17, for example by a mirror 20 which can rotate around two orthogonal axis with appropriate actuation means 21, 22 for example motors driven actuators, the principle of which is well known in the art.

The embodiments of the invention described in the present specification are given as illustrative examples and must not be interpreted in a limiting manner. Other variants and equivalent solutions are possible within the scope of the appended claims.

## Claims

1. Machine for cutting an opening, such as a window in a planar substrate (1), said machine having at least a cutting tool (12) **characterised in that** it comprises a transfer system (7,8) holding said substrate (1) and driving said substrate along a determined direction, and **in that** the cutting tool (12) comprises a laser beam (13) that can be moved in two perpendicular directions and evacuation means (11,15) to evacuate a cut part of said substrate (1).

2. Machine as claimed in claim 1, wherein it further comprises an aspiration box (9) to maintain the substrate (1) during the cutting operation.

3. Machine as claimed in claim 2, wherein said aspiration box (9) comprises a bottom wall (17) with aspiration openings (10) and a cutting opening (14).

4. Machine as claimed in one of the preceding claims, wherein said transfer system is a chain gripper system (17).

5. Machine as claimed in one of the preceding claims, wherein said laser (12) is displaced linearly or rotationally.

6. Machine as claimed in one of claims 1 to 4, wherein said laser beam (13) is displaced linearly or rotationally.

7. Machine as claimed in one of the preceding claims, wherein it further comprises a laminate application unit for applying a strip of laminate over the cut opening of the substrate.

8. Process for cutting an opening, such as a window, in a planar substrate, said process being **characterised by** the following steps:
- ) holding said substrate with a gripper,
- ) moving said substrate along a given direction,
- ) applying said substrate against a surface,
- ) illuminating said substrate with a laser beam to cut an opening in said substrate,
- ) evacuating the cut part of said substrate.

9. Process according to claim 8, wherein said application step of substrate against a surface is made by using air under depression.

10. Process according to claim 8 or 9, wherein said evacuation step is made by aspiration means with air under depression.

11. Process according to one of claims 8 to 10, wherein said laser beam is displaced along two orthogonal axes.

12. Process according to one of claims 8 to 11, wherein said laser beam is rotated around two orthogonal axes.

13. Process according to one of claims 8 to 12, wherein a mirror displaces said laser beam.

14. Process according to one of claims 8 to 13, wherein it further comprises the step of applying laminate over the cut opening of the substrate.
